# FASCICULE DE BREVET EUROPEEN

(11) **EP 1 110 029 B1**
(45) Date de publication et mention de la délivrance du brevet: **07.01.2004**
(21) Numéro de dépôt: 99932933.7
(22) Date de dépôt: 21.07.1999
(51) Int. Cl.: F21V 8/00

(54) **PANNEAUX D'AFFICHAGE LUMINEUX**
LEUCHTENDE ANZEIGETAFEL
DISPLAY BACKLIGHTS

(30) Priorité: 26.08.1998 FR 9810731
(43) Date de publication de la demande: 27.06.2001
(73) Titulaire: Editions Publicite Excelsior, 82000 Montauban (FR)
(72) Inventeur: AZORIN, Bernard, F-82000 Montauban (FR)
(74) Mandataire: Morelle, Guy Georges Alain
(86) Numéro de dépôt international: PCT/FR1999/001786
(87) Numéro de publication internationale: WO 2000/012930

(56) Documents cités:
- WO-A-97/17689
- GB-A- 2 168 519

## Description

La présente invention concerne les panneaux d'affichage lumineux qui permettent de visualiser dans le domaine de la lumière visible tout message, et plus particulièrement, mais non exclusivement, les panneaux à usage publicitaire ou analogue.

On connaît déjà de nombreuses réalisations de panneaux d'affichage de type lumineux. Cependant, ces réalisations ne sont pas assez simples pour permettre la fabrication, en grandes quantités, de panneaux publicitaires.

On connaît en outre le document antérieur GB-A-2 168 519 qui se rapporte à un panneau d'affichage comportant d'une façon générale une plaque réalisée dans un matériau transparent, sur laquelle sont disposées une ou plusieurs parties réalisées dans un autre matériau transparent, et une source de lumière couplée avec la tranche de la plaque. La lumière se propage dans la plaque par réflexions totales successives et émerge de la plaque aux endroits comportant la ou lesdites parties pour rendre ces dernières lumineuses sur la totalité de leur surface et visibles par des personnes qui regardent la plaque sensiblement de face. Lesdites parties en matériau transparent sont constituées d'un support translucide comportant des particules diffusantes de type pigment. Ce type d'affichage présente un rendement modeste quant à la quantité de lumière captée par lesdites parties en matériau transparent. En outre, l'implantation des pigments dans les parties solides comme celles qui sont décrites dans ce document présente des difficultés techniques de réalisation et de mise en oeuvre.

Aussi la présente invention a-t-elle pour but de réaliser un panneau d'affichage lumineux dont la structure pallie les inconvénients mentionnés ci-dessus des panneaux de l'art antérieur.

Plus précisément, la présente invention a pour objet un panneau d'affichage lumineux apte à être disposé dans un milieu d'indice optique de valeur n1, comportant :
- une plaque réalisée dans un premier matériau transparent pour au moins une longueur d'onde lumineuse dans la bande passante du visible, ledit premier matériau ayant un indice optique de valeur n2 supérieure à n1, ladite plaque étant délimitée par deux faces planes sensiblement parallèles présentant un poli sensiblement optique et par une tranche de bordure,
- une source de lumière visible,
- des moyens pour coupler ladite source de lumière visible avec la tranche de bordure de ladite plaque de façon que les rayons émis par ladite source de lumière visible pénètrent dans la plaque par cette tranche de bordure et se propagent à l'intérieur de la plaque entre les deux faces planes principalement par réflexions totales, et
- au moins une première couche réalisée dans un deuxième matériau transparent pour ladite longueur d'onde, ladite première couche étant disposée au contact optique d'une première des deux faces planes de la plaque, ledit deuxième matériau ayant un indice optique d'une valeur n3 supérieure à la valeur n1,
caractérisé en ce que ladite première couche est constituée par la superposition, l'une sur l'autre, d'au moins deux première et seconde sous-couches, ces deux sous-couches étant réalisées, quant à leur épaisseur respective et les matériaux les constituant, de façon que, ensemble, elles soient équivalentes à la première couche, ladite première sous-couche étant disposée au contact optique sur la première face de la plaque, ladite première sous-couche étant constituée par de la colle permettant de faire adhérer la seconde sous-couche sur la première face de la plaque, ladite seconde sous-couche étant constituée par de la colle à laquelle sont mélangés des pigments.

D'autres caractéristiques et avantages de la présente invention apparaîtront au cours de la description suivante donnée en regard des dessins annexés à titre illustratif, mais nullement limitatif, dans lesquels:
Les figures 1 et 2 représentent un mode de réalisation du panneau d'affichage lumineux selon l'invention, la figure 1 représentant une vue en coupe du panneau selon la figure 2, référencée I-I sur cette figure 2,
La figure 3 représente une vue en coupe partielle d'un second mode de réalisation du panneau d'affichage lumineux selon l'invention, et
Les figures 4, 5 et 6 représentent sous forme schématique d'autres modes de réalisation du panneau selon l'invention, en vue de face et en vue de côté.

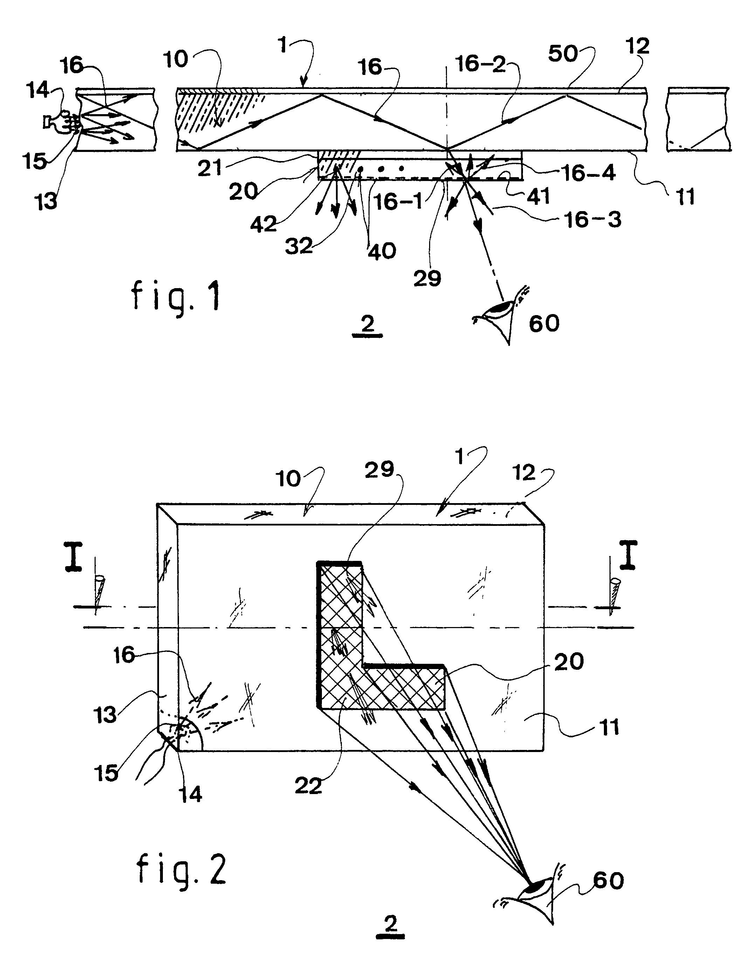

Bien que les figures 1 à 6 représentent différents modes de réalisation du panneau d'affichage lumineux selon l'invention, les mêmes références y désignent les mêmes éléments quelle que soit la figure sur laquelle elles apparaissent et quelle que soit la représentation de ces éléments.

Le Demandeur tient également à préciser que les figures représentent différents modes de réalisation de l'objet selon l'invention, mais qu'il peut exister d'autres modes de réalisation qui répondent à la définition de cette invention selon les revendications.

Il précise en outre que, lorsque, selon la définition de l'invention, l'objet de l'invention comporte "au moins un" élément ayant une fonction donnée, le mode de réalisation décrit peut comporter plusieurs de ces éléments.

Il précise aussi que, si les modes de réalisation de l'objet selon l'invention tels qu'illustrés comportent plusieurs éléments de fonction identique et que si, dans la description, il n'est pas spécifié que l'objet selon cette invention doit obligatoirement comporter un nombre particulier de ces éléments, l'objet de l'invention pourra être défini comme comportant "au moins un" de ces éléments.

Les figures 1 et 2 représentent un premier mode de réalisation d'un panneau d'affichage lumineux 1 apte à être disposé dans un milieu 2 d'indice optique de valeur n₁, comme de l'air, la valeur de n₁ étant dans ce cas égale à 1.

Le panneau 1 comporte une plaque 10 réalisée dans un premier matériau transparent pour au moins une longueur d'onde lumineuse dans la bande passante du visible.

Ce premier matériau a un indice optique d'une valeur n₂ supérieure à la valeur n₁. Il est par exemple constitué par du verre organique ou minéral, du PMMA, ou par un matériau connu sous la dénomination commerciale "Altuglas", etc.

La plaque 10 est délimitée par deux faces planes 11, 12 avantageusement sensiblement parallèles et présentant un poli sensiblement optique, et par une tranche de bordure 13.

Le panneau comporte en outre une source de lumière visible 14, par exemple une lampe émettant dans le domaine du visible comme une lampe au néon, ou analogue.

Il comporte aussi des moyens 15 pour coupler la sortie de la source de lumière visible 14 avec la tranche de bordure 13 de la plaque 10 de façon que les rayons lumineux 16 émis par la source de lumière visible puissent pénétrer dans la plaque par cette tranche de bordure et se propager à l'intérieur de la plaque entre les deux faces planes 11, 12 principalement par une succession de réflexions totales, comme cela se produit dans les fibres optiques ou analogues. Ces moyens de couplage peuvent être de différents types, par exemple des lentilles, des focalisateurs, des guides d'ondes lumineux, etc. Ils sont bien connus en eux-mêmes par les hommes de l'art et ne seront pas plus amplement décrits ici, dans l'unique souci de simplifier la présente description.

Le panneau comporte en outre au moins une première couche 20 réalisée dans un deuxième matériau transparent pour la longueur d'onde mentionnée ci-avant et disposée au contact optique d'une première 11 des deux faces planes 11, 12 de la plaque 10.

Ce deuxième matériau, par exemple de la matière plastique comme du PVC, du polyester, etc, présente un indice optique d'une valeur n₃ qui est supérieure au moins à la valeur n₁ et même avantageusement, si cela est possible, supérieure à la valeur n₂.

Sont en outre prévus des moyens 40 pour diffuser la lumière apte à se propager dans la première couche 20. Ces moyens 40 de diffusion de la lumière peuvent par exemple être constitués par un dépoli 41 réalisé sur la face 29 de la première couche 20 qui n'est pas au contact de la première face 11 de la plaque 10, ce dépoli 41 étant schématiquement représenté par une ligne en traits interrompus, et/ou par des points de matériaux opaques blancs 42 contenus dans la première couche 20. Dans ce dernier cas, les points de matériaux opaques blancs 42 sont par exemple constitués par une grille, une trame dégradée ou non, ou analogue, noyée dans cette première couche.

Dans le but d'améliorer sa luminosité, le panneau d'affichage lumineux peut comporter, comme illustré sur les figures 1 et 2, une deuxième couche 50 réalisée dans un matériau réfléchissant pour la longueur d'onde mentionnée ci-avant, cette deuxième couche 50 étant déposée sur la seconde face 12 de la plaque 10.

Le panneau d'affichage lumineux dont un premier mode de réalisation a été décrit ci-dessus en regard des figures 1 et 2 fonctionne de la façon suivante:

Il est tout d'abord supposé que la première couche 20 est constituée d'un seul matériau qui présente un indice optique d'une valeur n₃ supérieure à la valeur n₂, que l'indice optique n₁ est celui de l'air, c'est-à-dire égal à 1, et que l'indice n₂ supérieur à 1 est par exemple égal à 1,52, celui du verre.

Ceci étant précisé, la lampe 14 est allumée de façon que les rayons lumineux 16 qu'elle émet se propagent à l'intérieur de la plaque 10 en subissant une succession de réflexions totales sur les deux faces planes 11, 12, du fait que celles-ci sont relativement bien polies et qu'elles forment des dioptres de séparation entre un milieu incident d'indice optique n₂ supérieur à l'indice n₁ du milieu extérieur constitué par l'air.

Cependant, quand les rayons lumineux 16 arrivent au niveau du dioptre de séparation entre la plaque 10 et la première couche 20, ils subissent une réfraction partielle 16-1 dans la couche 20 et un réflexion partielle 16-2 pour continuer à se propager dans la plaque 10.

La naissance des rayons réfractés 16-1 est favorisée par un indice optique n₃ de la première couche 20 supérieur à l'indice optique n₂ de la plaque 10. Dans le cas où n₃ est compris entre n₁ et n₂, la réfraction sera moins importante mais existera néanmoins.

Les rayons réfractés 16-1 tombent alors sur le dépoli de la face 29 et subissent une diffraction par transmission 16-3 et par réflexion 16-4. Comme les rayons diffractés par transmission 16-3 se répartissent dans un angle solide relativement important, nombre de ces rayons sont obligatoirement sensiblement normaux au plan de la face 29 et peuvent émerger de la première couche 20 puis se propager dans l'air et ainsi être captés, par exemple, par l'oeil 60 d'un observateur.

En fait, le phénomène décrit ci-dessus se produit sur toute la face 29 de la couche 20 et l'observateur peut percevoir l'objet lumineux 22 que forme la première couche 20 sur la plaque 10.

A titre d'exemple illustré sur la figure 2, la première couche 20 présente la forme d'un "L" et, dans ce cas, l'observateur percevra ce "L" lumineux sans percevoir de façon notable tout le restant de la face 11 de la plaque 10, surtout si cette face présente le poli optique nécessaire pour éviter que les faisceaux se propageant à l'intérieur de la plaque n'émergent, ne serait-ce que partiellement, de cette face 11.

Comme il est malgré tout relativement difficile d'obtenir un poli optique parfait, il est avantageux de recouvrir au moins la seconde face 12 de la plaque 10 avec la couche réfléchissante 50 mentionnée ci-avant, de même que, si cela est possible, l'ensemble de la tranche 13 de la plaque et la partie de la face 11 qui n'est pas recouverte par la première couche 20.

La première couche 20 définie ci-avant a été décrite comme étant unitaire. Cependant, il est bien évident qu'elle peut être constituée de différentes façon, notamment comme celle qui est illustrée sur les deux figures 1 et 2.

Cette première couche 20 est en effet, selon l'invention constituée par la superposition, l'une sur l'autre, d'au moins deux première et seconde sous-couches 21, 32 réalisées, quant à leur épaisseur respective et les matériaux les constituant, de façon que, ensemble, elles soient optiquement équivalentes à la première couche 20.

Il est important que la première sous-couche 21 soit disposée parfaitement au contact optique sur la première face 11 de la plaque 10. Elle peut ainsi être constituée par de la colle permettant de faire parfaitement adhérer la seconde sous-couche 32 sur la première face 11 de la plaque 10.

Cependant dans une réalisation avantageuse, la première sous-couche 21 peut être constituée par de la colle de base aqueuse ou à solvant. Quant à la seconde sous-couche 32, elle peut être constituée par un mélange d'une colle, par exemple celle constituant la première sous-couche 21, avec des pigments blancs, par exemple du blanc de titane, de façon à obtenir une seconde sous-couche parfaitement autocollante sur la première sous-couche et former ainsi, avec l'ensemble des deux sous-couches, une colle adhésive blanche et opaque adhérant sur la première face 11 de la plaque 10.

Cet ensemble constitue en fait la première couche 20 comme définie ci-avant comportant en outre le dépoli 41 constitué par exemple comme mentionné ci-avant par une grille, une trame dégradée ou non, ou analogue. Cette première couche 20 permet donc de conduire la lumière tel un guide d'onde lumineux.

Cette première couche 20 permet d'obtenir, avec des réalisations structurelles particulières, différentes répartitions de la lumière.

Dans une première réalisation, cette première couche 20 avec le dépoli 41, se présente sous la forme de bandes, par exemple en ligne, ces bandes étant réalisées selon les formats des panneaux mais en obéissant toujours à une maquette type déterminée.

Par exemple, ces bandes sont perpendiculaires aux axes des tubes de lumière fluorescents qui sont disposés parallèles à la tranche de bordure 13.

De plus, ces bandes peuvent avoir une section, prise en regard de ces tubes, de relativement faible valeur pour arriver à des sections plus larges au niveau sensiblement du centre de la plaque ou sur un axe central de celle-ci, l'espace compris entre deux bandes étant déterminé de façon à obtenir le rendu visuel souhaité pour une répartition voulue de la lumière.

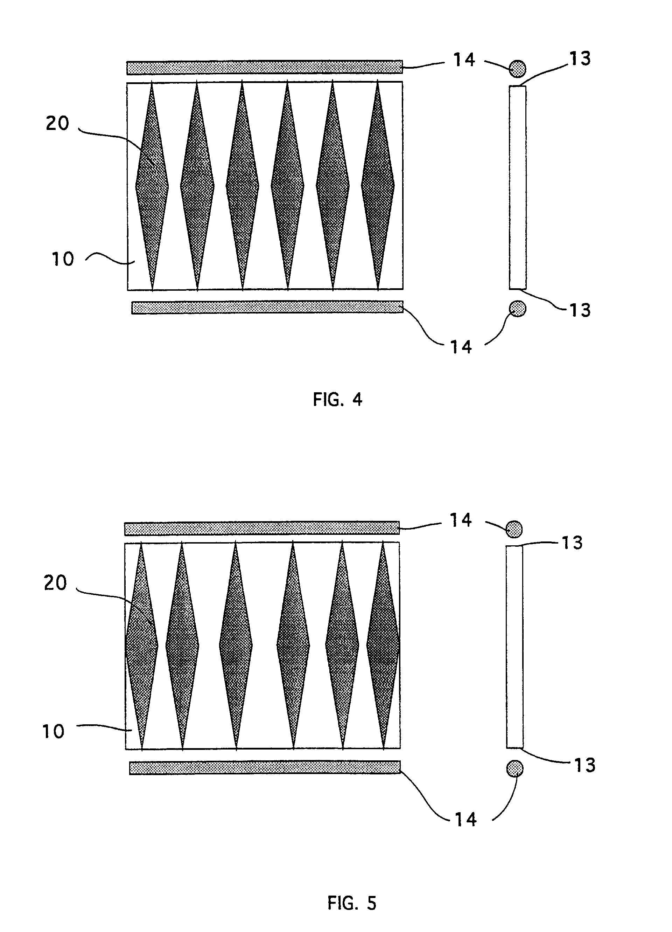

Les figures 4, 5 et 6 représentent des formes possibles de réalisation de plaques 10 avec leur première couche 20 comme défini ci-avant.

La figure 4 montre un panneau lumineux comprenant une plaque 10 dont les bordures 13 sont éclairées par deux tubes de lumière fluorescents 14 placés sur deux côtés opposés de la plaque 10, avec des bandes parallèles, telles que décrites plus haut, régulièrement espacées.

La figure 5 montre un panneau lumineux comprenant une plaque 10 dont les bordures 13 sont éclairées par deux tubes de lumière fluorescents 14 placés sur deux côtés opposés de la plaque 10, avec des bandes parallèles comme décrit plus haut, irrégulièrement espacées, les bandes les plus proches des bords non éclairés de la plaque étant plus proches les unes des autres.

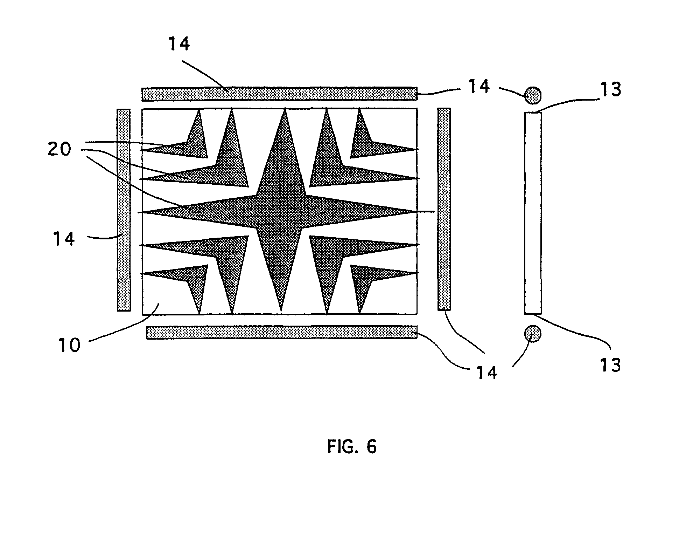

La figure 6 montre un panneau lumineux comprenant une plaque 10 dont les bordures 13 sont éclairées par quatre tubes de lumière fluorescents 14 placés sur les quatre côtés de la plaque 10, les bandes étant perpendiculaires à l'axe des tubes comme décrit plus haut jusqu'au diagonales de la plaque 10, comme représenté sur la figure 6.

A titre d'exemple, le déposant a établi la luminance moyenne sur une plaque de PMMA de 620 mm par 860 mm et 12 mm d'épaisseur, selon un éclairage et des bandes du type de celui représenté sur la figure 4 ; les deux tubes fluorescents sont des tubes d'une puissance de 30 Watts et d'une longueur de 900 mm, et les mesures de luminance ont été effectuées du côté de la face de la plaque opposé à celui portant les bandes ; les bandes possèdent une largeur de 0,075 mm environ près des bordures 13 et une largeur de 1,5 mm sur une ligne médiane de la plaque à l'endroit où elles sont le plus larges, formant une surface totale de 0,119 m² environ pour une surface de la plaque égale à 0,533 m² ; l'espacement régulier des bandes est de 3,5 mm pris près des bordures 13 ; les mesures de luminance en différents points de la plaque et à une distance de deux mètres de celle-ci, selon une direction perpendiculaire à la face de la plaque ont permis d'établir une luminance moyenne de la plaque de 405 Cd/m².

La couche 20 peut aussi être constituée d'une couche d'adhésif sur une face de laquelle est fixée une trame qui peut être une couche d'encre, de peinture ou de fibres. L'adhésif et la trame solidaires peuvent être réalisés sous la forme d'une feuille qui sera fixée par simple pression sur une face de la plaque 10, par l'intermédiaire de la face de la couche d'adhésif opposée à celle portant la trame.

Dans le cas où le panneau d'affichage lumineux est réalisé comme illustré sur les figures 1 et 2, l'oeil 60 de l'observateur capte les faisceaux 16-3 diffractés par transmission. L'observateur doit dans ce cas être positionné du côté de la plaque 20 opposé à sa face 12 qui porte la couche réfléchissante 50.

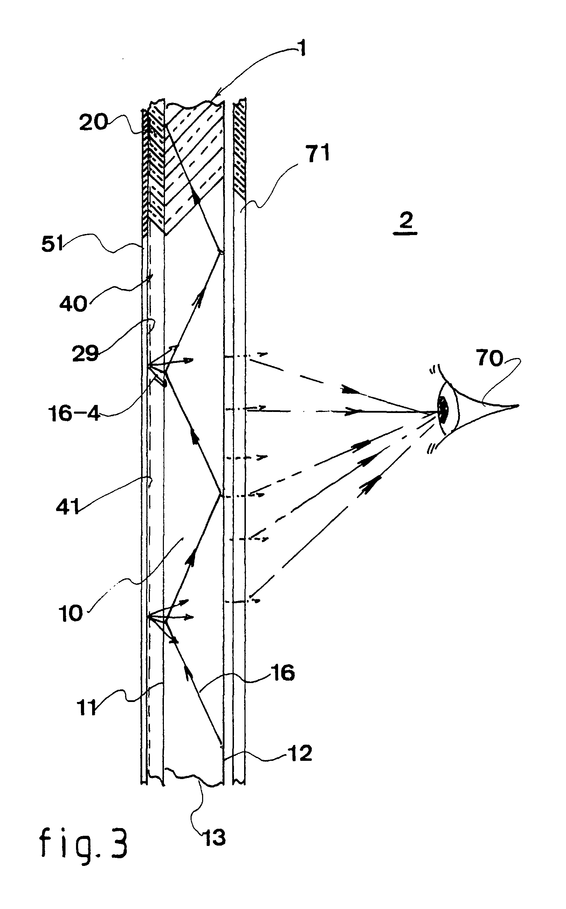

Dans le mode de réalisation illustré sur la figure 3, le panneau d'affichage lumineux ne comporte pas de deuxième couche réfléchissante 50 sur la seconde face 12 de la plaque 10. L'observateur peut alors capter les faisceaux 16-4 diffractés par réflexion sur la face 29 de la première couche 20. Dans ce cas, l'oeil 70 peut être placé de l'autre côté de la plaque 10 par rapport à sa position pour le mode de réalisation selon les figures 1 et 2.

Il est même aussi concevable, à titre d'application possible du panneau selon l'invention, que la première couche 20 recouvre alors toute la première face 11 de la plaque 10 et permet ainsi d'éclairer, par derrière à la manière d'une diapositive, une image 71 positionnée en regard de la seconde face 12 de la plaque.

Pour le deuxième mode de réalisation décrit en regard de la figure 3, afin d'augmenter la quantité de lumière 16-4 diffractée par réflexion, il peut être avantageux de recouvrir la face 29 de la première couche 20 par une troisième couche 51 réalisée dans un matériau réfléchissant pour la même longueur d'onde que celle mentionnée ci-avant.

## Revendications

1. Panneau d'affichage lumineux (1) apte à être disposé dans un milieu (2) d'indice optique de valeur n1, comportant :
- une plaque (10) réalisée dans un premier matériau transparent pour au moins une longueur d'onde lumineuse dans la bande passante du visible, ledit premier matériau ayant un indice optique de valeur n2 supérieure à n1, ladite plaque étant délimitée par deux faces planes (11, 12) sensiblement parallèles présentant un poli sensiblement optique et par une tranche de bordure (13),
- une source de lumière visible (14),
- des moyens (15) pour coupler ladite source de lumière visible (14) avec la tranche de bordure (13) de ladite plaque (10) de façon que les rayons (16) émis par ladite source de lumière visible pénètrent dans la plaque par cette tranche de bordure (13) et se propagent à l'intérieur de la plaque entre les deux faces planes (11, 12) principalement par réflexions totales, et
- au moins une première couche (20) réalisée dans un deuxième matériau transparent pour ladite longueur d'onde, ladite première couche étant disposée au contact optique d'une première (11) des deux faces planes (11, 12) de la plaque (10), ledit deuxième matériau ayant un indice optique d'une valeur n3 supérieure à la valeur n1,
***caractérisé en ce que*** ladite première couche (20) est constituée par la superposition, l'une sur l'autre, d'au moins deux première et seconde sous-couches (21, 32), ces deux sous-couches étant réalisées, quant à leur épaisseur respective et les matériaux les constituant, de façon que, ensemble, elles soient équivalentes à la première couche, ladite première sous-couche (2 1 ) étant disposée au contact optique sur la première face (11) de la plaque (10), ladite première sous-couche (21) étant constituée par de la colle permettant de faire adhérer la seconde sous-couche (32) sur la première face (11) de la plaque, ladite seconde sous-couche (32) étant constituée par de la colle à laquelle sont mélangés des pigments.

2. Panneau selon la revendication 1, **caractérisé en ce que** ladite première sous-couche (2 1 ) est constituée par de la colle de base aqueuse ou à solvant.

3. Panneau selon l'une des revendications 1 et 2, **caractérisé en ce que** la valeur n3 est supérieure à la valeur n2.

4. Panneau selon l'une des revendications 1 à 3, **caractérisé en ce que** ladite première couche (20) comporte en outre des moyens (40) pour diffuser la lumière apte à s'y propager.

5. Panneau selon la revendication 4, **caractérisé en ce que** lesdits moyens pour diffuser la lumière apte à se propager dans la première couche (20) sont constitués par un dépoli (41) réalisé sur la face (29) de cette première couche (20) qui n'est pas au contact de la première face (11) de la plaque (10).

6. Panneau selon la revendication 4, ***caractérisé en ce que*** lesdits moyens pour diffuser la lumière apte à se propager dans la première couche (20) sont constitués par des points de matériaux opaques (42) contenus dans ladite première couche.

7. Panneau selon la revendication 6, ***caractérisé en ce que*** les points de matériaux opaques (42) sont constitués par une grille ou trame noyée dans ladite première couche (20).

8. Panneau selon l'une des revendications 1 à 7, ***caractérisé en ce qu***'il comporte une deuxième couche (50) réalisée dans un matériau réfléchissant pour ladite longueur d'onde et déposée sur la seconde face (12) de la plaque (10).

9. Panneau selon l'une des revendications 1 à 8, ***caractérisé en ce qu***'il comporte une troisième couche (51) réalisée dans un matériau réfléchissant pour ladite longueur d'onde et déposée sur la face (29) de la première couche (20) qui n'est pas au contact de la première face (11) de la plaque (10).

10. Panneau selon l'une des revendications 1 à 9, ***caractérisé en ce que*** ladite première couche (20) se présente sous forme de bandes ayant des sections adaptées pour obtenir une répartition déterminée de la lumière transmise.

## Patentansprüche

1. Leucht-Anzeigetafel (1) für die Anordnung in einer Umgebung (2) mit einem Brechungsindex mit dem Wert n1, umfassend:
- eine Platte (10) aus einem ersten Material, das für Licht mindestens einer Wellenlänge innerhalb des Durchgangsbereichs des sichtbaren Lichts transparent ist, wobei das erste Material einen Brechungsindex mit dem Wert n2 größer als n1 hat, wobei die Platte durch zwei ebene Flächen (11, 12), die im wesentlichen parallel sind und eine im Wesentlichen optische Politur aufweisen, und durch eine Abschlussscheibe (13) bestimmt ist,
- eine Quelle sichtbaren Lichts (14),
- Mittel (15) zum Koppeln dieser Quelle sichtbaren Lichts (14) mit der Abschlussscheibe (13) der Platte (10), derart, dass die von der Quelle sichtbaren Lichts ausgesendeten Strahlen (16) durch diese Abschlussscheibe (13) in die Platte eindringen und sich im Innern der Platte zwischen den beiden ebenen Flächen (11, 12) im Wesentlichen über Totalreflexionen ausbreiten, und
- mindestens eine erste Schicht (20) aus einem zweiten für Licht dieser Wellenlänge transparenten Material, wobei die erste Schicht in optischem Kontakt zu einer ersten (11) derbeiden ebenen Flächen (11,12) der Platte (10) angeordnet ist, wobei dieses zweite Material einen Brechungsindex mit dem Wert n3 größer als n1 hat,
**dadurch gekennzeichnet,**
**dass** die erste Schicht (20) durch die Überlagerung von mindestens zwei Unterschichten, einer ersten und einer zweiten (21, 32), gebildet wird, wobei diese Unterschichten hinsichtlich ihrer jeweiligen Dicke und ihres Materials derart ausgebildet sind, dass sie gemeinsam der ersten Schicht entsprechen, wobei die erste Unterschicht (21) in optischem Kontakt auf der ersten Fläche (11) der Platte (10) angeordnet ist, wobei die erste Unterschicht (21) aus Klebstoff gebildet ist, der ein Anhaften der zweiten Unterschicht (32) auf der ersten Fläche (11) der Platte erlaubt, wobei die zweite Unterschicht (32) aus Klebstoff gebildet ist, der mit Pigmenten versetzt ist.

2. Tafel nach Anspruch 1,
**dadurch gekennzeichnet,**
**dass** die erste Unterschicht (21) von Klebstoff auf wässriger oder Lösemittelbasis gebildet ist.

3. Tafel nach einem der Ansprüche 1 und 2,
**dadurch gekennzeichnet,**
**dass** der Wert n3 größer ist als der Wert n2.

4. Tafel nach einem der Ansprüche 1 bis 3,
**dadurch gekennzeichnet,**
**dass** die erste Schicht (20) ferner Mittel (40) aufweist für die Streuung des Lichts, das sich in ihr ausbreiten kann.

5. Tafel nach Anspruch 4,
**dadurch gekennzeichnet,**
**dass** die Mittel zur Streuung des Lichts, das sich in der ersten Schicht (20) ausbreiten kann, aus einer Mattienmg (41) bestehen, die auf der Fläche (29) dieser ersten Schicht (20) ausgebildet ist, die keinen Kontakt mit der ersten Fläche (11) der Platte (10) hat.

6. Tafel nach Anspruch 4,
**dadurch gekennzeichnet,**
**dass** die Mittel zur Streuung des Lichts, das sich in der ersten Schicht (20) ausbreiten kann, von Punkten aus lichtundurchlässigem Material (42) gebildet sind, die in der ersten Schicht enthalten sind.

7. Tafel nach Anspruch 6,
**dadurch gekennzeichnet,**
**dass** die Punkte aus lichtundurchlässigem Material (42) durch ein Gitter oder ein Raster gebildet werden, das in die erste Schicht (20) eingebettet ist.

8. Tafel nach einem der Ansprüche 1 bis 7,
**dadurch gekennzeichnet,**
**dass** sie eine zweite Schicht (50) aus einem für Licht dieser Wellenlänge reflektierenden Material aufweist, die auf der zweiten Fläche (12) der Platte (10) angeordnet ist.

9. Tafel nach einem der Ansprüche 1 bis 8,
**dadurch gekennzeichnet,**
**dass** sie eine dritte Schicht (51) aus einem für Licht dieser Wellenlänge reflektierenden Material aufweist, die auf der Fläche (29) der ersten Schicht (20) aufliegt, die keinen Kontakt mit der ersten Fläche (11) der Platte (10) hat.

10. Tafel nach einem der Ansprüche 1 bis 9,
**dadurch gekennzeichnet,**
**dass** die erste Schicht (20) die Form von Streifen aufweist, deren Querschnitte zum Erreichen einer bestimmten Verteilung des ausgesendeten Lichts angepasst sind.

## Claims

1. Display backlight (1) capable of being arranged in an environment (2) having an optical index with a value n1, comprising:
- a plate (10) formed from a first material transparent for at least one light wavelength in the bandwidth of visible light, said first material having an optical index with a value n2 higher than n1, said plate being delimited by two substantially parallel plane surfaces (11,12) having a substantially optical polish and by a peripheral edge (13),
- a source of visible light (14),
- means (15) for coupling said source of visible light (14) with the peripheral edge (13) of said plate (10) such that the rays (16) emitted by said source of visible light penetrate into the plate via this peripheral edge (13) and are propagated inside the plate between the two plane surfaces (11,12) mainly by total reflections, and
- at least one first layer (20) formed from a second material transparent for said wavelength, said first layer being disposed in optical contact with a first (11) of the two plane surfaces (11,12) of the plate (10), said second material having an optical index with a value n3 higher than the value n1, **characterised in that** said first layer (20) is constituted by superposing, the one on the other, at least two first and second sub-layers (21, 32), these two sub-layers being realised, as regards their respective thickness and the materials constituting them, in such a way that together they are equivalent to the first layer, said first sub-layer (21) being disposed in optical contact on the first surface (11) of the plate (10), said first sub-layer (21) being constituted by glue making it possible to make the second sub-layer (32) adhere on the first surface (11) of the plate, said second sub-layer (32) being constituted by glue with which pigments are mixed.

2. Display backlight according to claim 1, **characterised in that** said first sub-layer (21) is made up of water-based or solvent-based glue.

3. Display backlight according to one of claims 1 and 2, **characterised in that** the value n3 is higher than the value n2.

4. Display backlight according to one of claims 1 to 3, **characterised in that** said first layer (20) comprises in addition means (40) for diffusing the light capable of being propagated there.

5. Display backlight according to claim 4, **characterised in that** said means for diffusing the light capable of being propagated in the first layer (20) are constituted by a diffusing screen (41) realised on the surface (29) of this first layer (20) which is not in contact with the first surface (11) of the plate (10).

6. Display backlight according to claim 4, **characterised in that** said means for diffusing the light capable of being propagated in the first layer (20) are constituted by dots of opaque materials (42) contained in said first layer.

7. Display backlight according to claim 6, **characterised in that** the dots of opaque materials (42) are constituted by a grid or screen embedded in said first layer (20).

8. Display backlight according to one of claims 1 to 7, **characterised in that** it comprises a second layer (50) formed from a material which is reflective for said wavelength and deposited on the second surface (12) of the plate (10).

9. Display backlight according to one of claims 1 to 8, **characterised in that** it comprises a third layer (51) formed from a material which is reflective for said wavelength and deposited on the surface (29) of the first layer (20) which is not in contact with the first surface (11) of the plate (10).

10. Display backlight according to one of claims 1 to 9, **characterised in that** said first layer (20) comes in the form of bands which have cross-sections adapted to obtain a specific distribution of the transmitted light.
